# EUROPEAN PATENT APPLICATION

(11) **EP 0 985 937 A2**
(43) Date of publication of application: **15.03.2000**
(21) Application number: 99307052.3
(22) Date of filing: 06.09.1999
(51) Int. Cl.: G01S 7/52, G01S 7/521, G10K 11/16

(54) **Piezoelectric transducer assembly and method**

(30) Priority: 11.09.1998 GB 9819917
(71) Applicant: Meggitt Mobrey Limited, Wimborne, Dorset (GB)
(72) Inventor: Smallwood, Timothy John, Slough SL2 3QD (GB); Turner, Roy Colin, Maidenhead, Berks SL6 8DH (GB)
(74) Representative: Skone James, Robert Edmund

(57) **Abstract**

A piezoelectric transducer assembly comprises a piezoelectric transducer (2) having transmitting and receiving portions. A control system (Figure 4) supplies a control signal to the transmitting portion of the piezoelectric transducer (2) and receives a signal from the receiving portion. The control system includes an electronic simulation circuit (27) which simulates the coupling between the transmitting and receiving portions of the piezoelectric transducer (2) and the effects of the receiving portion on the received signal. The simulation circuit (27) receives a copy of the control signal and generates an output signal equivalent to the output signal which is generated by the piezoelectric transducer (2) as a result of the receiving portion receiving a signal from the transmitting portion directly. Modifying means (21) modifies the signal from the receiving portion with the signal output from the electronic simulation circuit (27).

## Description

The invention relates to a piezoelectric transducer assembly, for example for use in a vibration assembly such as an electromechanical liquid level sensor and a method for use with such an assembly.

Some liquid level sensors use a vibrating member in the form of a tuning fork which is driven by a number of piezoelectric elements so that the fork vibrates at its resonant frequency. As the fork comes into contact with a body of fluid, its vibration frequency changes and thus the presence of the fluid, typically a liquid, can be detected. An example of this type of vibration assembly is disclosed in US-A-5709558.

Problems with the known arrangements are the need to provide a stack of piezoelectric elements which is undesirable from the point of view of the number of discrete connections required, any one of which may fail, and the number of assembly steps involved. A piezoelectric transducer is available having transmitting and receiving portions on a single crystal but the problem with this is that the receiving portion can receive a signal transmitted by the transmitting portion directly, thus causing an unduly large signal to be received which could erroneously be taken to correspond to a resonant frequency. One approach is to reduce the amplification of this received signal but this reduces the sensitivity and thus the usefulness of the sensor.

In accordance with one aspect of the present invention, a piezoelectric transducer assembly comprises a piezoelectric transducer having transmitting and receiving portions; and a control system for supplying a control signal to the transmitting portion of the piezoelectric transducer and for receiving a signal from the receiving portion, the control system including an electronic simulation circuit which simulates the coupling between the transmitting and receiving portions of the piezoelectric transducer and the effects of the receiving portion on the received signal, the simulation circuit receiving a copy of the control signal and generating an output signal equivalent to the output signal which is generated by the piezoelectric transducer as a result of the receiving portion receiving a signal from the transmitting portion directly, and modifying means for modifying the signal from the receiving portion with the signal output from the electronic simulation circuit.

In accordance with a second aspect of the present invention, a method of compensating for coupling between a transmitting portion of a piezoelectric transducer, to which a control signal is fed, and a receiving portion, and for the effects of the receiving portion on a signal received by the receiving portion comprises simulating the effect of the receiving portion receiving a signal directly from the transmitting portion to generate a modifying signal, and modifying signals from the receiving portion in accordance with the modifying signal.

In this invention, we eliminate the coupling effect between the transmitting and receiving portions and the effect of the receiving portion on the received signal during the signal processing.

Typically, the coupling effect and that due to the receiving portion are primarily capacitive effects, the electronic simulation circuit comprising a corresponding capacitor arrangement. This capacitor arrangement can be determined by reference to elements of the control system and also empirically.

Typically, the control system includes a high frequency filter for removing high frequencies from the received signal, the electronic simulation circuit including an equivalent filter so that the same conditions are presented to the simulated signal as to the receive signal.

The modifying means could include a suitably programmed microprocessor or the like but preferably comprises a combiner to which the two signals are fed.

Typically, the control signal will be a modified version of the signal received from the receive portion of the piezoelectric transducer.

The piezoelectric transducer can take a variety of forms but conveniently comprises a piezoelectric crystal having a common electrode on one side and receive and transmit electrodes on the other side. The receive and transmit electrodes are conveniently in the form of a disc and a surrounding annulus spaced from the disc. Either of these electrodes can comprise the receive and transmit electrode. The piezoelectric crystal could be provided on a ceramic or other substrate.

The invention is particularly suitable for use in a vibration assembly in which the transmitting and receiving portions are coupled to a vibrating member such as a tuning fork. An example is a level sensor such as a liquid level sensor.

An example of a liquid level sensor including a piezoelectric transducer assembly according to the present invention will now be described with reference to the accompanying drawings, in which:-
Figure 1 is a schematic plan of a piezoelectric transducer;
Figure 2 is a view on the line II-II in Figure 1;
Figure 3 is an exaggerated section on the line II-II when the transducer is subjected to an applied voltage; and,
Figure 4 is a circuit diagram of the control system connected to the transducer.

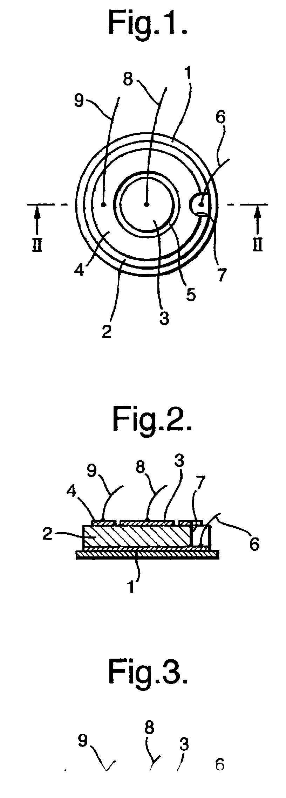

The piezoelectric transducer shown in Figures 1 to 3 comprises a ceramic base 1 which carries a silver coating on its upper surface. A piezoelectric crystal 2 is soldered to the base 1 via a further silver coating on its underside which will form a common electrode (to be described below). The upper, exposed surface of the crystal 2 carries two silver coatings, one 3 appearing in the form of a central silver disc and the other 4 in the form of a silver annulus surrounding the disc 3. A small space 5 exists between the disc 3 and the annulus 4. Electrical connections are made to each of the silver coatings. A wire 6 is connected to the common silver coating between the crystal 2 and the base 1, which is exposed through a notch 7 in the crystal 2. A wire 8 is connected to the central disc 3 and a wire 9 to the annulus 4.

As can be seen in Figure 2, the two electrodes 3,4 lie in the same plane and in this example, the transmit portion comprises the outer annulus 4 while the inner disc 3 comprises the receive portion. However, as explained above, these can be transposed. The piezoelectric element 2 is fixed to the ceramic base 1 which converts the radial displacement of the element into a curved configuration as shown in Figure 3 when the element is energised with one polarity and the opposite displacement when energised with the opposite polarity.

In the liquid level sensor, the base 1 along with the piezoelectric element 2, or the piezoelectric element alone, is fixed into the lower inner body of a tuning fork type level sensor and thus the movement assumed by the piezoelectric element can be used to vibrate the tuning forks.

As explained above, in view of the close proximity between the electrodes 3,4, a coupling capacitance exists between them.

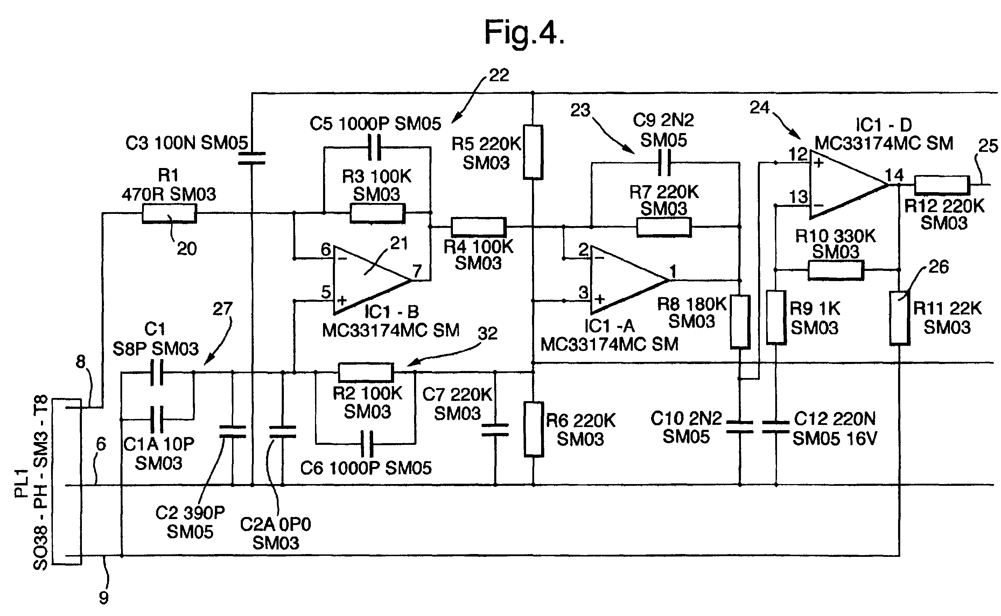

The circuit for controlling the piezoelectric element 2 is shown in Figure 4. The receive signal from the disc 3 is fed along the wire 8 via a resistor 20 to the inverting input of an operational amplifier 21 constituting a combiner. A high frequency filter circuit constituting a capacitor and resistance in parallel is located across the combiner 21 as shown at 22. The output of the combiner 21 is also fed forward to conditioning circuits 23,24 which provide further phase shifting and filtering and the resultant signal is fed to subsequent processing electronics (not shown) at 25. This signal is also fed back via a resistor 26 directly to the transmitting electrode 4 via the wire 9.

In order to compensate for the capacitive coupling between the electrodes 3,4, the transmit control signal is also supplied to a capacitor network 27 which is arranged and chosen so as to simulate the coupling effect. In addition, the circuit 27 includes a resistor and capacitor circuit 32 which corresponds to the filter 22 and thus presents to the output signal from the circuit 27 the same conditions as are presented to the signal on the wire 8.

The simulated signal is fed to the non-inverting input of the combiner 21 so that it will be summed algebraically with the incoming signal from the electrode 3 and the effect of cross coupling will be removed.

It should be understood that although the circuit 27 is shown as comprising a set of capacitors, additional inductors and/or resistors could also be used.

## Claims

1. A piezoelectric transducer assembly comprising a piezoelectric transducer having transmitting and receiving portions; and a control system for supplying a control signal to the transmitting portion of the piezoelectric transducer and for receiving a signal from the receiving portion, the control system including an electronic simulation circuit which simulates the coupling between the transmitting and receiving portions of the piezoelectric transducer and the effects of the receiving portion on the received signal, the simulation circuit receiving a copy of the control signal and generating an output signal equivalent to the output signal which is generated by the piezoelectric transducer as a result of the receiving portion receiving a signal from the transmitting portion directly, and modifying means for modifying the signal from the receiving portion with the signal output from the electronic simulation circuit.

2. An assembly according to claim 1, wherein the electrical simulation circuit comprises a capacitor arrangement.

3. An assembly according to claim 1 or claim 2, wherein the control system includes a high frequency filter, the electronic simulation circuit including an equivalent filter.

4. An assembly according to any of the preceding claims, wherein the modifying means comprises a combiner.

5. An assembly according to claim 4, when dependent on claim 3, wherein the high frequency filter is connected so as to feed back the output of the combiner to the input for the receive signal from the receive portion of the piezoelectric transducer.

6. An assembly according to any of the preceding claims, wherein the control signal is a fed back version of the signal received from the receive portion of the piezoelectric transducer.

7. An assembly according to any of the preceding claims, wherein the piezoelectric transducer comprises a piezoelectric crystal having a common electrode on one side and receive and transmit electrodes on the other side.

8. An assembly according to claim 7, wherein the receive and transmit electrodes comprise a disc and a surrounding annulus spaced from the disc.

9. A vibration assembly comprising a piezoelectric transducer assembly according to any of the preceding claims; and a vibration member coupled with the transmitting and receiving portions of the piezoelectric transducer.

10. A liquid level sensor comprising a vibration assembly according to claim 9; and a processor connected to the vibration assembly to receive the output of the modifying means and to generate an indication of the level of a liquid being sensed.

11. A method of compensating for coupling between a transmitting portion of a piezoelectric transducer, to which a control signal is fed, and a receiving portion, and for the effects of the receiving portion on a signal received by the receiving portion, the method comprising simulating the effect of the receiving portion receiving a signal directly from the transmitting portion to generate a modifying signal, and modifying signals from the receiving portion in accordance with the modifying signal.

12. A method according to claim 12, wherein the modifying step comprises algebraically summing signals from the receiving portion with the modifying signal.
